# EUROPEAN PATENT APPLICATION

(11) **EP 4 834 643 A1**
(43) Date of publication of application: **04.11.2026**
(21) Application number: 26175490.7
(22) Date of filing: 29.04.2026
(51) Int. Cl.: B60L 3/00, B60L 3/04, H01H 9/00, H01H 9/54, H01H 47/00, H01H 89/00, H02H 3/08, H02H 3/44, H02H 7/08

(54) **MOTOR CONTROL UNIT WITH FAULT ISOLATION, DISTRIBUTED POWERTRAIN, AND VEHICLE**

(30) Priority: 30.04.2025 CN 202510577181
(71) Applicant: HUAWEI TECHNOLOGIES CO., LTD., Shenzhen 518129 (CN)
(72) Inventor: XIAO, Longxing, Shenzhen Guangdong, 518129 (CN); YUE, Pengfei, Shenzhen Guangdong, 518129 (CN); BAI, Lifei, Shenzhen Guangdong, 518129 (CN); XU, Yankun, Shenzhen Guangdong, 518129 (CN)
(74) Representative: Gill Jennings & Every LLP

(57) **Abstract**

This application provides a motor control unit with fault isolation, a distributed powertrain, and a vehicle. The motor control unit includes a three-phase bridge arm, a direct current breaker, an alternating current breaker, and one control apparatus. Two ends of the three-phase bridge arm are configured to be connected to a power battery through a direct current bus, and a bridge arm midpoint of each phase bridge arm in the three-phase bridge arm is configured to be connected to one phase winding of a drive motor. The control apparatus is configured to be connected to a direct current drive module and an alternating current drive module through an internal line, the one control apparatus is configured to: control the direct current drive module to drive a direct current breaking module to establish or break a connection between the three-phase bridge arm and the direct current bus, and control the alternating current drive module to drive an alternating current breaking module to establish or break connections between bridge arm midpoints of at least two phase bridge arms and at least two phase windings, so that a fault of the powertrain can be isolated, thereby ensuring normal running of other electrical components of the electric vehicle. This helps reduce a safety anchoring rate of the vehicle.

## Description

### TECHNICAL FIELD

This application relates to the vehicle field, and in particular, to a motor control unit with fault isolation, a distributed powertrain, and a vehicle.

### BACKGROUND

With improvement of environmental protection awareness and continuous development of electric vehicle technologies, demands for dual-drive electric vehicles are increasing in the market. When a high-voltage circuit of an electric vehicle is short-circuited, to ensure safety of passengers and the electric vehicle, power supply of a power battery needs to be turned off when the high-voltage circuit is short-circuited. Otherwise, a drive motor is burnt and even a vehicle is spontaneously combusted.

Currently, a common solution is to set a main protection apparatus when a direct current bus power distribution architecture of a vehicle is output from a power battery, and then supply power to each load connected to a direct current bus. In this case, if a specific load connected to a high-voltage bus is short-circuited, the main protection apparatus is turned off, and the high-voltage bus of the vehicle is powered off, so that safety of the vehicle and passengers can be ensured. However, the main protection apparatus is turned off, and consequently due to a short circuit of one load, all loads connected to the high-voltage bus are powered off, resulting in a power loss. Therefore, how to isolate a short-circuit fault when one load is short-circuited is an urgent problem to be resolved.

### SUMMARY

This application provides a motor control unit with fault isolation, a distributed powertrain, and a vehicle. An independent direct current breaker is disposed between a power battery and a motor control unit of an electric vehicle, and an independent alternating current breaker is disposed between a drive motor and the motor control unit, so that a control apparatus in the motor control unit can turn off a corresponding breaker when a short-circuit fault occurs on a direct current side or an alternating current side, and a fault of the powertrain can be isolated, thereby ensuring normal running of other electrical components of the electric vehicle. This helps reduce a safety anchoring rate of the vehicle.

According to a first aspect, a motor control unit with fault isolation is provided. The motor control unit is configured to: receive power supplied by a power battery through a direct current bus, and output an alternating current to a drive motor to drive the drive motor. The motor control unit includes a three-phase bridge arm, a direct current breaker, an alternating current breaker, and one control apparatus. Two ends of the three-phase bridge arm are configured to be connected to the power battery through the direct current bus, and a bridge arm midpoint of each phase bridge arm in the three-phase bridge arm is configured to be connected to one phase winding of the drive motor. The direct current breaker includes a direct current drive module and a direct current breaking module, and the direct current drive module is configured to drive the direct current breaking module to break a connection between the three-phase bridge arm and the direct current bus. The alternating current breaker includes an alternating current drive module and an alternating current breaking module, and the alternating current drive module is configured to drive the alternating current breaking module to break connections between bridge arm midpoints of at least two phase bridge arms and at least two corresponding phase windings. The one control apparatus is configured to be connected to the direct current drive module and the alternating current drive module through an internal line, and the one control apparatus is configured to: control the direct current drive module to drive the direct current breaking module to establish or break the connection between the three-phase bridge arm and the direct current bus, and control the alternating current drive module to drive the alternating current breaking module to establish or break the connections between the bridge arm midpoints of the at least two phase bridge arms and the at least two phase windings.

It may be understood that the direct current bus includes a positive direct current bus and a negative direct current bus, the positive direct current bus is connected to a positive electrode of the power battery, and the negative direct current bus is connected to a negative electrode of the power battery. It may be understood that the motor control unit may receive, through the direct current breaker, power supplied by the positive direct current bus, or receive, through the direct current breaker, power supplied by the negative direct current bus, or receive, through two direct current breaking sub-modules in the direct current breaker, power supplied by the positive direct current bus and the negative direct current bus.

Further, when a short-circuit fault occurs inside a powertrain, the control apparatus controls the direct current breaker to break a connection between the powertrain and the direct current bus. In this way, regardless of whether a short-circuit fault occurs inside the motor control unit, a motor, or a connecting harness inside the powertrain, the fault can be prevented from spreading to the power battery and other high-voltage electrical devices connected in parallel on the direct current bus through the direct current bus, thereby avoiding occurrence of a propulsion power problem caused by power-off of the vehicle. There may be a plurality of cases for types and locations of faults occurring in the powertrain. For example, a short-circuit fault occurs in the motor control unit in the powertrain. Specifically, the short-circuit fault may occur inside the motor control unit, for example, a power device or another electrical element, or may occur outside the motor control unit, for example, a housing of the motor control unit, a harness of the motor control unit, or a connection joint between the motor control unit and the power battery. For another example, a short-circuit fault occurs in the drive motor in the powertrain. For example, a winding coil of the drive motor may be short-circuited, or a connecting harness between a winding of the drive motor and the motor control unit may be faulty.

It may be understood that the alternating current breaker may be connected in series between a bridge arm midpoint of the three-phase bridge arm and three phase windings of the motor, or the alternating current breaker may be connected in series between bridge arm midpoints of any two phase bridge arms and windings corresponding to the motor. Further, when a short-circuit fault occurs inside the powertrain, the control apparatus controls the alternating current breaker to break a connection between the motor control unit and the motor, to prevent the short-circuit fault from damaging an electrical component that is not faulty in the powertrain, and improve safety of the powertrain.

According to the solution of this application, an independent direct current breaker is disposed between a power battery and a motor control unit of an electric vehicle, and an independent alternating current breaker is disposed between a drive motor and the motor control unit, so that a control apparatus in the motor control unit can turn off a corresponding breaker when a short-circuit fault occurs on a direct current side or an alternating current side, and a fault of the powertrain can be isolated, thereby ensuring normal running of other electrical components of the electric vehicle. This reduces a safety anchoring rate of the vehicle. In addition, the motor control unit does not need to set two independent control apparatuses to respectively control the direct current breaker and the alternating current breaker, but can implement control of the direct current breaker and the alternating current breaker through a same control apparatus, so that a quantity of control apparatuses of the motor control unit can be reduced. This facilitates cost and volume control of the motor control unit.

With reference to the first aspect, in some implementations, the motor control unit includes a circuit board, and the circuit board is configured to: bear the direct current drive module, the alternating current drive module, and an electrical component of the control apparatus.

The circuit board may be a circuit board that is in the motor control unit and that is dedicated to bearing the direct current drive module, the alternating current drive module, and the electrical component of the control apparatus, and is independent of a circuit board that is configured to bear an electrical component of the three-phase bridge arm or an electrical component of a control circuit of the three-phase bridge arm. This helps further reduce electromagnetic interference to a control signal output by the control apparatus, and ensure control stability.

It may be understood that when the control apparatus and the control circuit of the three-phase bridge arm are independent circuits, the circuit board may also bear the electrical component for controlling the control circuit of the three-phase bridge arm, to further improve integration of the motor control unit.

It may be understood that the circuit board may be further configured to bear the electrical component of the three-phase bridge arm, to further improve integration of the motor control unit.

According to this embodiment of this application, one circuit board bears the direct current drive module, the alternating current drive module, and the electrical component of the control apparatus, so that a path for transmitting the control signal by the control apparatus to the direct current drive module and the alternating current drive module can be shortened, thereby reducing interference to the control signal in a transmission process, and helping improve control stability and reliability. In addition, the direct current breaker and the alternating current breaker may be used only as actuators to establish or break a connection between two ends of the direct current breaker and a connection between two ends of the alternating current breaker, so that a structure is simple and reliable, and complexity and costs of installing and maintaining the two breakers can be further reduced.

With reference to the first aspect, in some implementations, the direct current breaker further includes at least two switch modules connected in series, the at least two switch modules are configured to be connected to the control apparatus and the direct current breaking module, and the control apparatus is specifically configured to: control the direct current drive module to drive the at least two switch modules to be all turned on, so that the direct current breaking module breaks the connection between the three-phase bridge arm and the direct current bus.

For example, one end of the switch module is configured to be connected to the direct current breaking module, the other end is configured to be connected to the one end of the switch module, and the other end of the switch module is configured to be connected to the control apparatus. In this way, after the direct current drive module drives the two switch modules to be both turned on, a connection between the control apparatus and the direct current breaking module is broken. In this case, the control apparatus may supply power to the direct current breaking module, so that the direct current breaking module breaks the connection between the three-phase bridge arm and the direct current bus.

In some embodiments, for a switch module of a specific structure, the control apparatus may further control the two switch modules to be both turned off, so that the direct current breaking module breaks the connection between the three-phase bridge arm and the direct current bus.

It may be understood that a separate auxiliary power supply (not shown in the figure) may be further disposed in the direct current breaker to supply power to the direct current breaking module. In this case, two ends of each of the two switch modules are configured to be connected to the auxiliary power supply and the direct current breaking module, and the control apparatus may control the direct current drive module to drive the two switch modules to act synchronously, so that the auxiliary power supply supplies power to an actuation apparatus b.

It may be understood that the two switch modules may be centrally disposed on a side of the control apparatus or a side of the direct current breaker (for example, accommodated in a housing of the direct current breaker), or may be separately disposed, to be specific, one switch module is disposed on the side of the control apparatus, and the other switch module is disposed on the side of the direct current breaker. This is not limited in this embodiment of this application.

According to the solution of this application, the control apparatus needs to control the two switch modules to act synchronously, so that the direct current breaking module can receive power supplied by the control circuit and break quickly. This can effectively avoid a case in which the control apparatus controls the direct current breaking module to perform an incorrect action because the switch module is invalid when only one switch module is disposed in the breaker, and ensure stability and reliability of the direct current breaker.

With reference to the first aspect, in some implementations, in response to power-on of the control apparatus, the control apparatus is further configured to: control the direct current drive module to drive one switch module to be first turned on and then turned off, and control, within preset duration after the one switch module is turned off, the drive module to drive the other switch module to be first turned on and then turned off.

Power-on of the control apparatus may be understood as power-on of the motor control unit. In this embodiment of this application, each time the motor control unit is woken up and powered on, the control apparatus controls the direct current drive module to perform self-check on the two switch modules. The two switch modules acting simultaneously causes the direct current breaking module to act. Therefore, the control apparatus needs to control the direct current drive module to drive the two switch modules to be successively turned on, to detect whether the two switch modules are in a controlled state.

The preset duration may be understood as extremely short duration. The control apparatus controls the direct current drive module to drive the other switch module to be turned on only after preset duration following turn-off of one switch module, to ensure that the two switch modules are not simultaneously turned on, thereby avoiding an incorrect action of the direct current breaking module. For example, the preset duration may be 1 ms, or may be 0. This is not limited in this embodiment of this application.

It may be understood that a sequence in which the control apparatus controls the two switch modules to be turned on and turned off is not limited in this embodiment of this application. For example, the control apparatus may first control the direct current drive module to drive one switch the switch module to be first turned on and then turned off, and control, within preset duration after the switch module is turned off, the direct current drive module to drive the other switch module to be first turned on and then turned off.

According to the solution of this application, when being powered on, the control apparatus performs self-check on the two switch modules in the direct current breaker, to improve stability and reliability of the direct current breaker, and improve security of the motor control unit.

With reference to the first aspect, in some implementations, in the process of controlling the drive module to drive the one switch module to be first turned on and then turned off, and controlling, within the preset duration after the one switch module is turned off, the direct current drive module to drive the other switch module to be first turned on and then turned off, the control apparatus is further configured to output a fault signal in response to a failure of any switch module to be turned on or turned off, or an interval between turn-on moments of the two switch modules or an interval between turn-off moments of the two switch modules being greater than the preset duration, where the fault signal indicates that the direct current breaker is faulty.

The direct current breaking module can run normally only when the two switch modules need to act synchronously. A failure of any switch module to be turned on or turned off may be understood as that the control apparatus cannot control an action of the any switch module. This indicates that the direct current breaker cannot break the connection between the three-phase bridge arm and the direct current bus even if a short-circuit fault occurs in the powertrain. As a result, the control apparatus interprets this as a fault occurring in the direct current breaker.

The interval between the turn-on moments of the two switch modules or the interval between the turn-off moments of the two switch modules being greater than the preset duration may be understood as that there is a delay in controlling at least one switch module by the control apparatus. If a delay in controlling any switch module by the direct current breaker occurs when the powertrain is faulty, a short-circuit fault on a side of the powertrain may spread to other high-voltage electrical components of the electric vehicle because the direct current breaker cannot be turned off in time. Therefore, the control apparatus interprets this as a fault in the direct current breaker.

In other words, in a process in which the control apparatus performs self-check on the two modules in the direct current breaker, if any switch module cannot be normally turned on or turned off, or there is a delay in controlling any switch module to be turned on or turned off, the control apparatus outputs a fault signal to another controller in the electric vehicle, to play an alarm function.

According to the solution of this application, in a process of performing self-check on the two switch modules in the direct current breaker, if any switch module is uncontrolled or has an excessively long delay, the control apparatus actively outputs a fault signal to another controller in the electric vehicle, so that a driver can learn a fault status of the powertrain in time, thereby ensuring safety of the electric vehicle.

With reference to the first aspect, in some implementations, a housing of the direct current breaker is configured to accommodate the direct current drive module, the direct current breaking module, the control apparatus, and the at least two switch modules.

Specifically, the control apparatus may be connected to the direct current breaking module through the two switch modules and the internal line, so that a power supply path from the control apparatus to the direct current breaking module can be shortened. In addition, the control apparatus is further connected to the direct current drive module through the internal line, so that a control path from the control apparatus to the direct current drive module can be shortened. This helps shorten a delay in controlling the direct current breaker by the control apparatus.

It may be understood that the control apparatus may be further connected to the alternating current drive module through an interface on a surface of the housing, to control turn-on and turn-off of the alternating current breaking module.

According to the solution of this application, the control apparatus is integrated inside the housing of the direct current breaker, so that the delay in controlling the direct current breaker can be shortened, it can be ensured that an internal fault in the powertrain does not spread along the direct current bus, and reliability of fault isolation of the motor control unit can be further improved.

With reference to the first aspect, in some implementations, the alternating current breaker further includes a first switch module, one end of the first switch module is configured to be connected to the alternating current breaking module, the other end of the first switch module is configured to be connected to one end of a second switch module in the at least two switch modules, the other end of the second switch module is configured to be connected to the control apparatus, and the control apparatus is specifically configured to: control the alternating current drive module to drive the first switch module and the second switch module to be turned on, so that the alternating current breaking module breaks the connections between the bridge arm midpoints of the at least two phase bridge arms and the at least two phase windings. In other words, the alternating current breaker may include only one switch module, and the other switch module reuses one switch module of the direct current breaker.

It may be understood that the second switch module may be any one of the two switch modules of the direct current breaker. This is not limited in this application. In addition, both the alternating current drive module and the direct current drive module may control turn-on and turn-off of the second switch module, and the control apparatus may control, when a short-circuit fault occurs in any phase winding of the motor, the alternating current drive module to drive the first switch module and the second switch module to act synchronously, to control the actuation apparatus b in the alternating current breaking module to cut off a conductor a, thereby breaking the connections between the bridge arm midpoints of the at least two phase bridge arms and the at least two phase windings.

It may be understood that when the two switch modules, the control apparatus, and the direct current drive module are integrated on the side of the direct current breaker, the alternating current drive module may be configured to drive only the first switch module, and the direct current drive module is responsible for driving the second switch module. Specifically, when a short-circuit fault occurs in any phase winding of the motor, the control apparatus may control the alternating current drive module to drive the first switch module to act, and control the direct current drive module to drive the second switch module to act synchronously, to enable the alternating current breaking module to act.

According to the solution of this application, the direct current breaker and the alternating current breaker may share one switch module. This reduces a quantity of switch modules that need to be controlled by the control apparatus, and reduces control complexity.

With reference to the first aspect, in some implementations, in the process of controlling the alternating current drive module to drive the first switch module and the second switch module to be turned on, the control apparatus is further configured to: in response to a failure of the first switch module to be turned on, control the direct current drive module to drive the two switch modules to be both turned on, so that the direct current breaking module breaks the connection between the three-phase bridge arm and the direct current bus.

It may be understood that when a short-circuit fault occurs in the winding of the motor, in a process of controlling, by the control apparatus, the alternating current breaker to break the connection between the bridge arm midpoint and the winding, if the first switch module cannot be controlled to be turned on or turned off due to a fault, the control apparatus may control the direct current to break the connection between the three-phase bridge arm and the direct current bus, to break a connection between the powertrain and the direct current bus, thereby avoiding the fault spreading of the motor. Specifically, the control apparatus may control the direct current drive module to drive the two switch modules to act synchronously, so that the actuation apparatus in the direct current breaking module cuts off the conductor to break the connection between the three-phase bridge arm and the direct current bus.

According to the solution of this application, when a short-circuit fault occurs in the motor and the alternating current breaker cannot be controlled to be turned off, the control apparatus may further control the direct current breaker to be turned off, to prevent the short-circuit fault of the motor from spreading to other high-voltage electrical components of the electric vehicle through the direct current bus, thereby further improving safety of the electric vehicle. In addition, because the direct current breaker and the alternating current breaker are controlled by a same control apparatus, a delay of controlling the direct current breaker to be turned off when the alternating current breaker is faulty can be shortened, and reliability of fault isolation of the motor control unit can be further improved.

With reference to the first aspect, in some implementations, the housing of the direct current breaker is further configured to accommodate the alternating current drive module and the first switch module. According to the solution of this application, the alternating current drive module, the two switch modules of the direct current breaker, and one switch module of the alternating current breaker are all integrated inside the housing of the direct current breaker, so that the alternating current drive module has higher stability in controlling the first switch module and the reused second switch module. In addition, an internal structure of the alternating current drive module is simpler, and reliability is higher.

With reference to the first aspect, in some implementations, the control apparatus is specifically configured to: in response to that a current passing through the direct current breaker is greater than a first current, or an increase rate of a current passing through the direct current breaker is greater than a first current rate, control the direct current drive module to drive the direct current breaking module; or the control apparatus is specifically configured to: in response to that a current passing through the alternating current breaker is greater than a second current, or an increase rate of a current passing through the alternating current breaker is greater than a second current rate, control the alternating current drive module to drive the alternating current breaking module.

It may be understood that the first current may be understood as a large current value, and the first current rate may be understood as a large change rate. A part of a direct current in a current output by the power battery is input to the three-phase bridge arm through the direct current breaker. When a short-circuit fault occurs in the three-phase bridge arm, a current passing through the direct current breaker suddenly increases. When the current passing through the direct current breaker is greater than the first current or an increase rate of the current passing through the direct current breaker is greater than the first current rate, it indicates that an internal fault occurs in the powertrain. In this case, to protect other electrical components, the direct current breaker needs to be turned off, to break the connection between the powertrain and the direct current bus, thereby isolating the short-circuit fault in the powertrain.

In addition, when a short-circuit fault occurs in another high-voltage component on the direct current bus, the current passing through the direct current breaker also suddenly increases. When the current passing through the direct current breaker is greater than the first current or when the increase rate of the current passing through the direct current breaker is greater than the first current rate, the control apparatus controls the direct current breaker to be turned off, so that the short-circuit fault on the direct current bus can be further prevented from spreading inside the powertrain, and safety of the powertrain can be improved.

Similarly, the second current may be understood as a large current value, and the second current rate may be understood as a large change rate. When the current passing through the alternating current breaker is greater than the second current or the increase rate of the current passing through the alternating current breaker is greater than the second current rate, it indicates that a short-circuit fault occurs in any phase winding of the motor. In this case, to protect the switch module in the three-phase bridge arm and other electrical components connected in parallel on the direct current bus, the alternating current breaker needs to be turned off, to break a connection between the three-phase bridge arm and the motor, thereby isolating the short-circuit fault of the motor.

It may be understood that the motor control unit may include a detection apparatus. The detection apparatus may detect the currents passing through the direct current breaker and the alternating current breaker, and send a current signal to the control apparatus, and the control apparatus may control the direct current breaker based on the current signal. The current signal may indicate the current or the increase rate of the current passing through the direct current breaker or the alternating current breaker, or may indicate only that an overcurrent phenomenon occurs in the direct current breaker or the alternating current breaker. This is not limited in this embodiment of this application.

According to the solution of this application, the control apparatus may control a corresponding breaker to be turned off when the current passing through the direct current breaker or the alternating current breaker significantly increases, so that a control manner is simple, and reliability is high.

With reference to the first aspect, in some implementations, the control apparatus is further configured to: in response to that a current passing through any phase bridge arm is greater than a third current, or an increase rate of a current passing through any phase bridge arm is greater than a third current rate, first control the direct current drive module to drive the direct current breaking module, and then control the alternating current drive module to drive the alternating current breaking module.

It may be understood that if a single switch module in any phase bridge arm in the three-phase bridge arm is short-circuited, a current on the phase bridge arm significantly increases when the switch transistor module is closed. In this case, to avoid a short-circuit fault of the switch module from spreading through the direct current bus, the control apparatus may first control the direct current drive module to drive the direct current breaking module, to break the connection between the three-phase bridge arm and the direct current bus, thereby avoiding occurrence of propulsion power of the electric vehicle.

In addition, when the motor is a synchronous motor, if a single switch module in any phase bridge arm in the three-phase bridge arm is short-circuited, the current on the phase bridge arm significantly increases when the switch transistor module is closed. In this case, if a fault in the switch module is not isolated, a generated short-circuit current causes the synchronous motor to generate a large braking torque, thereby affecting traveling safety. Therefore, the control apparatus needs to control the alternating current breaker to break the connection between the three-phase bridge arm and the motor when a current passing through any phase bridge arm in the three-phase bridge arm is greater than the third current or when an increase rate of a current passing through any phase bridge arm in the three-phase bridge arm is greater than the third current rate. The at least two phase bridge arms may include the any phase bridge arm to which the invalid switch module belongs, or may not include the any phase bridge arm. This is not limited in this embodiment of this application.

According to this embodiment of this application, when the current passing through the any phase bridge arm in the three-phase bridge arm significantly increases, the control apparatus may first control the direct current breaker to be turned off to prevent an internal fault in the powertrain from spreading along the direct current bus, and then control the alternating current breaker to be turned off to prevent the motor in the powertrain from generating a braking torque due to the invalid switch module in the three-phase bridge arm, so that the vehicle does not suddenly decelerate even when power is lost, thereby further improving traveling safety.

With reference to the first aspect, in some implementations, the direct current bus includes a positive direct current bus and a negative direct current bus. The control apparatus is specifically configured to: in response to that a decrease rate of a voltage between the positive direct current bus and the negative direct current bus is greater than a first voltage rate, control the direct current drive module to drive the direct current breaking module; or the control apparatus is specifically configured to: in response to that a decrease rate of a phase voltage between any two phase windings in the three phase windings is greater than a second voltage rate, control the alternating current drive module to drive the alternating current breaking module.

The first voltage rate may be understood as a large voltage change rate. When a short-circuit fault occurs in an electrical component, for example, any switch module in the three-phase bridge arm, inside the motor control unit, the voltage between the positive direct current bus and the negative direct current bus drops quickly. Therefore, the control apparatus may control the direct current drive module to drive the direct current breaking module when the decrease rate of the voltage between the positive direct current bus and the negative direct current bus is greater than the first voltage rate, to break the connection between the powertrain and the direct current bus, so that the internal fault in the powertrain can be prevented from spreading to other high-voltage electrical components.

In addition, when the short-circuit fault occurs on the high-voltage electrical components connected in parallel on the direct current bus, the voltage between the positive direct current bus and the negative direct current bus also drops quickly. Therefore, when the decrease rate of the voltage between the positive direct current bus and the negative direct current bus is greater than the first voltage rate, the control apparatus controls the direct current drive module to drive the direct current breaking module, so that a fault of other electrical components can be prevented from spreading inside the powertrain, and safety of the powertrain can be improved.

The second voltage rate may be understood as a large voltage change rate. When a short-circuit fault occurs in any one of the three phase windings of the motor, a phase voltage between the faulty phase winding and another phase winding drops quickly. Therefore, the control apparatus may control the alternating current drive module to drive the alternating current breaking module when the decrease rate of the phase voltage between the any two phase windings in the three phase windings of the motor is greater than the second voltage rate, to break a connection between the motor control unit and the motor, prevent a fault in the motor from spreading inside the motor control unit, and improve safety of the powertrain.

According to the solution of this application, the control apparatus may control running of the direct current breaker based on a voltage change between the positive direct current bus and the negative direct current bus, and may further control running of the alternating current breaker based on a voltage change between the any two phase windings of the motor, so that a control manner is simple, and reliability is high.

With reference to the first aspect, in some implementations, the control apparatus is further configured to control a magnitude and a frequency of the alternating current that is output by the three-phase bridge arm to the drive motor. Specifically, the control apparatus may control, by controlling turn-on and turn-off of a switch transistor in the three-phase bridge arm, a magnitude and a frequency of an alternating current output by the bridge arm midpoint of the three-phase bridge arm to the three phase windings of the motor.

According to the solution of this application, the motor control unit may reuse the control apparatus to control the switch transistor in the three-phase bridge arm, so that integration of the motor control unit is higher. This facilitates cost and volume control of the motor control unit, and can further reduce structure complexity of the motor control unit.

According to a second aspect, a distributed powertrain is provided. The distributed powertrain is configured to receive power supplied by a power battery, and is configured to drive two front wheels or two rear wheels of a vehicle, the distributed powertrain includes a dual-motor control unit, a first motor, and a second motor, and the dual-motor control unit includes: a first inverter circuit, a second inverter circuit, a control apparatus, one direct current breaker, and two alternating current breakers. The first inverter circuit is configured to: receive, through the direct current breaker, power supplied by a direct current bus and output a three-phase alternating current to the first motor, and the second inverter circuit is configured to: receive, through a same direct current breaker, power supplied by the direct current bus and output a three-phase alternating current to another motor. The direct current breaker includes a direct current drive module and a direct current breaking module, and the direct current drive module is configured to drive the direct current breaking module to break a connection between the first inverter circuit and the direct current bus and a connection between the second inverter circuit and the direct current bus. Each alternating current breaker includes an alternating current drive module and an alternating current breaking module, an alternating current drive module in one alternating current breaker is configured to drive an alternating current breaking module to break a connection between the first inverter circuit and the first motor, and an alternating current drive module in the other alternating current breaker is configured to drive an alternating current breaking module to break a connection between the second inverter circuit and the second motor. The control apparatus is configured to control running of the direct current breaker and the two alternating current breakers.

According to the solution of this application, the two inverter circuits in the distributed powertrain may be combined and share a same direct current breaker to receive power supplied by the direct current bus, so that integration of the dual-motor control unit is high, and it is easy to install and use. In addition, the two inverter circuits in the distributed powertrain may be respectively connected to windings of the two motors through the two alternating current breakers, so that when any motor is faulty, only a corresponding alternating current breaker can be turned off, thereby avoiding occurrence of propulsion power of the electric vehicle.

According to a third aspect, an electric vehicle is provided. The electric vehicle includes a power battery and a powertrain, the powertrain includes a drive motor and the motor control unit according to any implementation of the first aspect, and the powertrain is configured to receive power supplied by the power battery to drive wheels of the electric vehicle.

### BRIEF DESCRIPTION OF DRAWINGS

FIG. 1 is a diagram of a direct current bus protection apparatus;
FIG. 2A to FIG. 2E are diagrams of several possible architectures of an electric vehicle 01 according to an embodiment of this application;
FIG. 3 and FIG. 4 are two diagrams of a powertrain 10 according to embodiments of this application;
FIG. 5 and FIG. 6 are two diagrams of structures of a direct current breaker 103 and an alternating current breaker 104 according to embodiments of this application;
FIG. 7 is a schematic of a circuit of a hybrid powertrain 30 according to an embodiment of this application; and
FIG. 8 and FIG. 9 are schematics of two circuits of a distributed powertrain 40 according to embodiments of this application.

### DESCRIPTION OF EMBODIMENTS

The following describes technical solutions of this application with reference to accompanying drawings.

Reference to "some embodiments" or the like described in this specification indicates that one or more embodiments of this application include a specific feature, structure, or characteristic described with reference to embodiments. Therefore, statements such as "in some embodiments" that appear at different places in this specification do not necessarily mean referring to a same embodiment, but mean "one or more but not all of embodiments", unless otherwise specifically emphasized in another manner. The terms "include", "have", and their variants all mean "include but are not limited to", unless otherwise specifically emphasized in another manner.

With improvement of environmental protection awareness and continuous development of vehicle technologies, demands for dual-motor drive vehicles and multi-motor drive vehicles are increasing in the market. When a high-voltage circuit of an electric vehicle is short-circuited, to ensure safety of passengers and the electric vehicle, power supply of a power battery needs to be turned off when the high-voltage circuit is short-circuited. Otherwise, a drive motor is burnt and even a vehicle is spontaneously combusted.

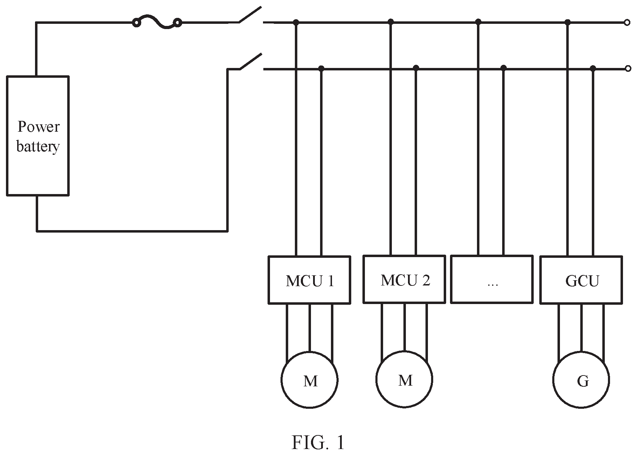

In a possible implementation, as shown in FIG. 1, a main protection apparatus is disposed at an output end of a power battery, and the power battery supplies power to each load, for example, a powertrain, through a high-voltage direct current bus. For example, a front-wheel powertrain and a rear-wheel powertrain in a dual-motor drive vehicle share a same high-voltage direct current bus to receive power supplied by the power battery. In this case, if a short-circuit fault occurs in one of the powertrains, the main protection apparatus on the high-voltage direct current bus is blown. In this way, the power battery no longer outputs a current, to ensure safety of the vehicle and a passenger.

It should be noted that there may be a plurality of cases for types and locations of faults occurring in the powertrain. For example, a short-circuit fault occurs in a motor control unit in the powertrain. Specifically, the short-circuit fault may occur inside the motor control unit, for example, a power device or another electrical element, or may occur outside the motor control unit, for example, a housing of the motor control unit, a harness of the motor control unit, or a connection joint between the motor control unit and the power battery. For another example, a short-circuit fault occurs in a drive motor in the powertrain. For example, a winding coil of the drive motor may be short-circuited, or a connecting harness between a winding of the drive motor and the motor control unit may be faulty. However, because the power battery no longer outputs the current after the main protection apparatus is blown, a normal electrical component that is not faulty at this time cannot run normally because of a power loss, and consequently the vehicle is powered off, and occurrence of a propulsion power is present.

In view of this, embodiments of this application provide a motor control unit with fault isolation, a powertrain, and an electric vehicle. An independent direct current breaker is disposed between a power battery and a motor control unit of an electric vehicle, and an independent alternating current breaker is disposed between a drive motor and the motor control unit, so that a control apparatus in the motor control unit can turn off a corresponding breaker when a short-circuit fault occurs on a direct current side or an alternating current side, and a fault of the powertrain can be isolated, thereby ensuring normal running of other electrical components of the electric vehicle. This reduces a safety anchoring rate of the vehicle.

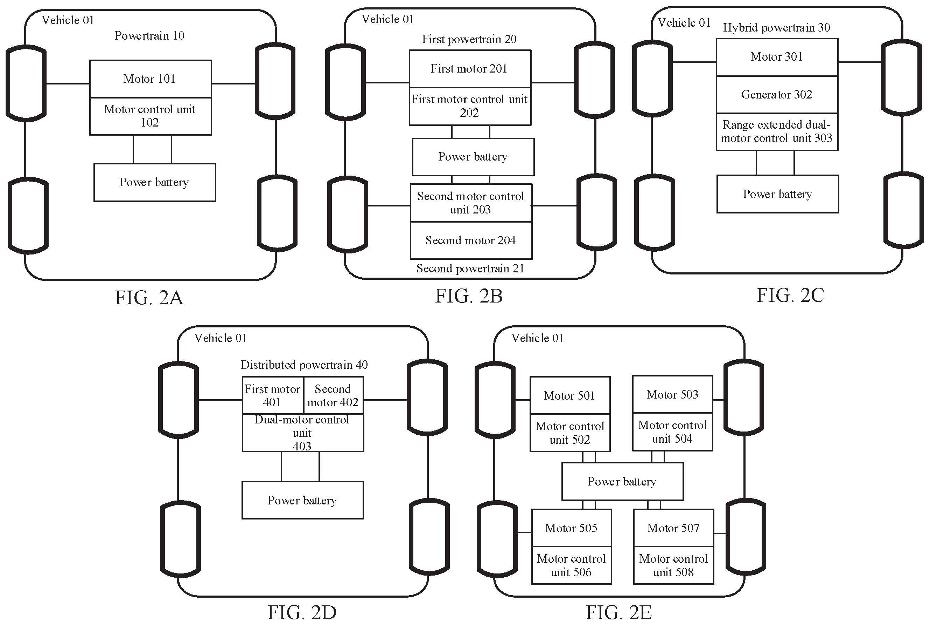

FIG. 2A to FIG. 2E are diagrams of several possible architectures of an electric vehicle 01 according to this application.

As shown in FIG. 2A, the electric vehicle 01 may be a single-motor drive vehicle, and the electric vehicle 01 may include a power battery, a powertrain 10, and four wheels. The powertrain 10 includes a motor 101 and a motor control unit 102. The motor control unit 102 is configured to: receive power supplied by the power battery, and output an alternating current to the motor 101 to drive the motor 101. It may be understood that the electric vehicle 01 may be a front-wheel drive vehicle, and in this case, the powertrain 10 is configured to drive two front wheels of the electric vehicle; or the electric vehicle 01 may be a rear-wheel drive vehicle, and in this case, the powertrain 10 is configured to drive two rear wheels of the electric vehicle.

As shown in FIG. 2B, the electric vehicle 01 may be a front-rear-wheel dual-motor drive vehicle. The electric vehicle 01 may include a power battery, a first powertrain 20, a second powertrain 21, and four wheels. The first powertrain 20 is configured to drive two front wheels of the vehicle 01, and the second powertrain 21 is configured to drive two rear wheels of the vehicle 01. The first powertrain 20 includes a first motor 201 and a first motor control unit 202. The first motor control unit 202 is configured to: receive power supplied by the power battery, and output an alternating current to the first motor 201 to drive the first motor 201. The second powertrain 21 includes a second motor 204 and a second motor control unit 203. The second motor control unit 203 is configured to: receive power supplied by the power battery, and output an alternating current to the second motor 204 to drive the second motor 204.

As shown in FIG. 2C, the electric vehicle 01 may be a hybrid electric vehicle, and the electric vehicle 01 may include a power battery, a hybrid powertrain 30, and four wheels. The hybrid powertrain 30 includes a motor 301, a generator 302, and a dual-motor control unit 303. The dual-motor control unit 303 is configured to: receive electric energy output by the generator 302, and charge the power battery; or the dual-motor control unit 303 is configured to: receive output electric energy, and supply power to the motor 301 to drive the motor 301; or the dual-motor control unit 303 is configured to: receive electric energy output by the generator 302 and electric energy output by the power battery, and supply power to the motor 301 to drive the motor 301. It may be understood that the dual-motor control unit 303 may also be split into a generator controller and a motor control unit, which are respectively configured to control the generator 302 and the motor 301.

As shown in FIG. 2D, the electric vehicle 01 may be a central distributed electric vehicle, and the electric vehicle 01 includes a power battery, a distributed powertrain 40, and four wheels. The distributed powertrain 40 includes a first motor 401, a second motor 402, and a dual-motor control unit 403. The first motor 401 and the second motor 402 are configured to drive two front wheels or two rear wheels. The motor control unit 403 is configured to: receive power supplied by the power battery, and output alternating currents to the first motor 401 and the second motor 402 to drive the two motors.

As shown in FIG. 2E, the electric vehicle 01 may be a wheel-side distributed electric vehicle, and the electric vehicle 01 includes four powertrains and four wheels. Specifically, a motor control unit 502 is configured to: receive power supplied by a power battery, and output an alternating current to a motor 501 to drive the motor 501. A motor control unit 504 is configured to: receive power supplied by the power battery, and output an alternating current to a motor 503 to drive the motor 503. A motor control unit 506 is configured to: receive power supplied by the power battery, and output an alternating current to a motor 505 to drive the motor 505. A motor control unit 508 is configured to: receive power supplied by the power battery, and output an alternating current to a motor 507 to drive the motor 507. Each powertrain may be a wheel-hub motor powertrain or a wheel-side motor powertrain. For the wheel-hub motor powertrain, a motor and a reducer are directly disposed in a wheel hub, and transmission components such as a half shaft, a universal joint, a differential, and a transmission are canceled. For the wheel-side motor powertrain, a motor is disposed on a subframe.

It may be understood that the electric vehicle shown in each of FIG. 2A to FIG. 2E includes at least one powertrain. The following uses the powertrain 10 as an example for description with reference to specific embodiments.

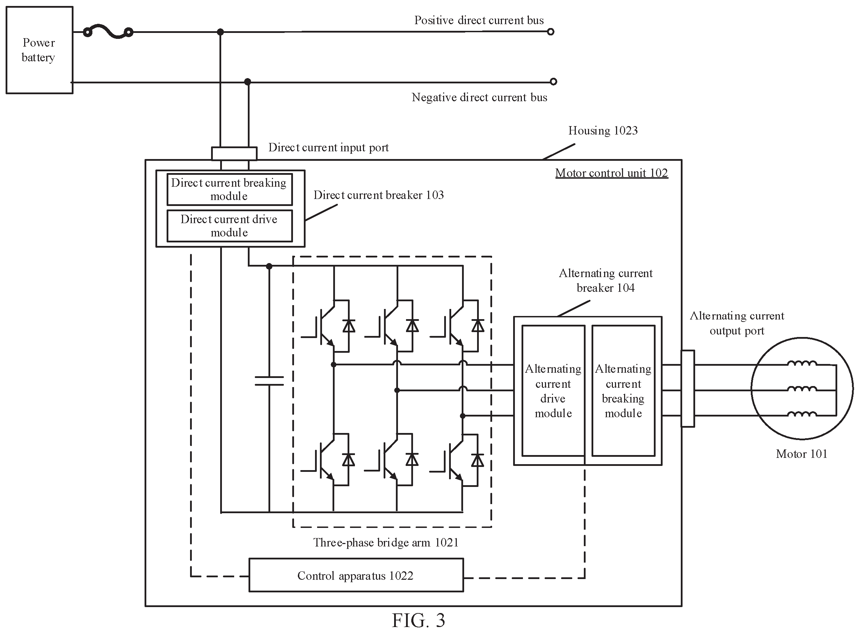

FIG. 3 is a diagram of a powertrain 10 according to an embodiment of this application.

As shown in FIG. 3, in some embodiments, a motor 101 includes three phase windings, and a motor control unit 102 includes a three-phase bridge arm 1021. Two ends of the three-phase bridge arm 1021 are respectively configured to be connected to a positive electrode of a power battery through a positive direct current bus and a negative electrode of the power battery through a negative direct current bus. A bridge arm midpoint of each phase bridge arm in the three-phase bridge arm 1021 is connected to one phase winding of the motor 101. The three-phase bridge arm 1021 is configured to: receive power supplied by the power battery, and output an alternating current to the motor 101 to drive the motor 101. Each bridge arm may include an upper bridge arm switch transistor and a lower bridge arm switch transistor, and a midpoint of each bridge arm may output one phase current to one phase winding of the motor.

In some embodiments, the motor control unit 102 further includes a direct current breaker 103 and an alternating current breaker 104. The three-phase bridge arm 1021 is configured to: receive power supplied by a direct current bus through the direct current breaker 103, and output an alternating current to the motor 101 through the alternating current breaker 104. The direct current breaker 103 is configured to establish or break a connection between the three-phase bridge arm 1021 and the direct current bus, and the alternating current breaker 104 is configured to establish or break connections between bridge arm midpoints of at least two phase bridge arms in the three-phase bridge arm 1021 and at least two phase windings of the connected motor 101.

In some embodiments, at least one of the direct current breaker 103 and the alternating current breaker 104 may be assembled inside a housing 1023 of the motor control unit 102.

For example, as shown in FIG. 3, the direct current breaker 103 may be assembled inside the housing 1023 of the motor control unit 102, that is, the housing 1023 is configured to accommodate the three-phase bridge arm 1021 and the direct current breaker 103. Specifically, the direct current breaker 103 is connected between a direct current input port on a surface of the housing 1023 and the three-phase bridge arm 1021, so that the three-phase bridge arm 1021 can receive the power supplied by the direct current bus through the direct current breaker 103. Further, the alternating current breaker 104 may also be assembled inside the housing 1023. Specifically, the alternating current breaker 104 is connected between the bridge arm midpoints of the at least two bridge arms in the three-phase bridge arm 1021 and an alternating current output port on the surface of the housing 1023, so that the three-phase bridge arm 1021 can supply power to the motor 101 through the alternating current breaker 104.

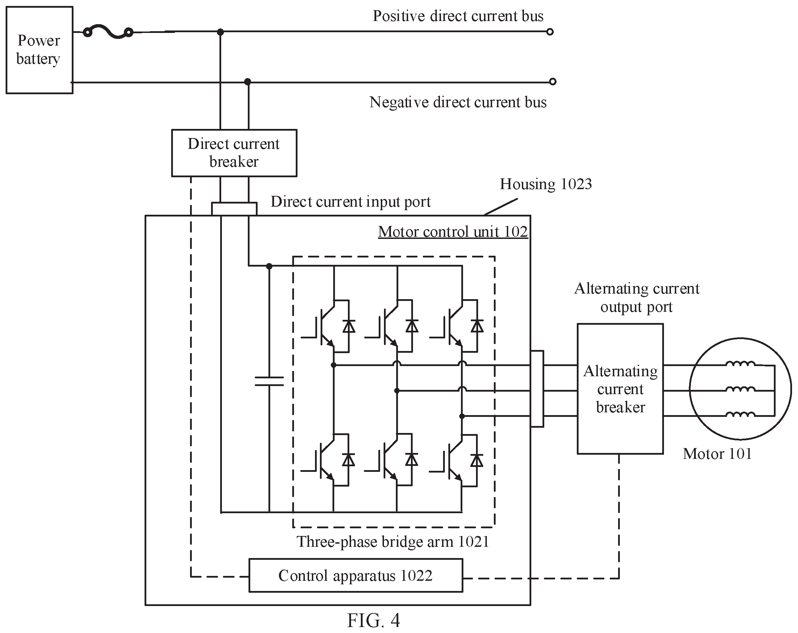

For another example, as shown in FIG. 4, the direct current breaker 103 may be assembled outside the housing 1023 of the motor control unit 102, that is, the direct current breaker 103 may be connected between the direct current bus and the direct current input port on the surface of the housing 1023. The direct current breaker 103 may be welded on the housing 1023, or fastened on the housing 1023 by using a bolt, a slide rail, or the like. Alternatively, the direct current breaker 103 may be assembled on a high-voltage harness between the powertrain 10 and the power battery, so that the power battery can be connected to a direct current input end of the motor control unit 102 sequentially through the direct current bus and the direct current breaker 103. Further, the alternating current breaker 104 may also be assembled outside the housing 1023. Specifically, the alternating current breaker 104 is connected between the alternating current output port on the surface of the housing 1023 and the at least two phase windings of the motor 101, so that the three-phase bridge arm 1021 can supply power to the motor 101 sequentially through the alternating current output port and the alternating current breaker 104.

It may be understood that either of the direct current breaker 103 and the alternating current breaker 104 may be assembled inside the housing 1023, and the other may be assembled outside the housing 1023. Details are not described herein.

In some embodiments, the direct current breaker 103 includes a direct current drive module 1031 and a direct current breaking module 1032, and the direct current drive module 1031 is configured to drive the direct current breaking module 1032 to break the connection between the three-phase bridge arm 1021 and the direct current bus. When the direct current breaker 103 is connected between a positive input end of the three-phase bridge arm 1021 and the positive direct current bus, or the direct current breaker 103 is connected between a negative input end of the three-phase bridge arm 1021 and the negative direct current bus, or the direct current breaker 103 may be connected between the two ends of the three-phase bridge arm 1021 and the positive direct current bus and the negative direct current bus. This is not limited in this application.

It should be noted that the direct current breaker 103 and the alternating current breaker 104 may be controlled switch apparatuses such as a switch transistor and a relay, or may be apparatuses for automatically detecting overcurrent and fuse blowing such as a fuse-link and a fuse. This is not limited in this application. The following uses an example in which the direct current breaker 103 and the alternating current breaker 104 are controlled switch apparatuses for description.

In some embodiments, the alternating current breaker 104 includes an alternating current drive module 1041 and an alternating current breaking module 1042, and the alternating current drive module 1041 is configured to drive the alternating current breaking module 1042 to break the connections between the bridge arm midpoints of the at least two phase bridge arms and the at least two corresponding phase windings.

For example, the alternating current breaking module 1042 may be connected in series between a bridge arm midpoint of the three-phase bridge arm and the three phase windings of the motor 101; and when one phase winding is faulty, break connections between bridge arm midpoints of any two phase bridge arms and corresponding windings of the motor. For example, when a short-circuit fault occurs in a winding 1, the alternating current breaking module 1042 may break a connection between a bridge arm 1 and the winding 1 and a connection between a bridge arm 2 and a winding 2, or may break a connection between a bridge arm 2 and a winding 2 and a connection between a bridge arm 3 and a winding 3.

For another example, the alternating current breaking module 1042 may be connected in series between bridge arm midpoints of any two phase bridge arms and corresponding windings of the motor 101; and when a short-circuit fault occurs in any phase winding, break connections between the bridge arm midpoints of the any two phase bridge arms and the corresponding windings of the motor 101. For example, the alternating current breaking module 1042 may be connected in series between a bridge arm 1 and a winding 1 and between a bridge arm 2 and a winding 2. If a short-circuit fault occurs in a winding 3, the alternating current breaking module 1042 may break a connection between the bridge arm 1 and the winding 1 and a connection between the bridge arm 2 and the winding 2.

Still refer to FIG. 3. In some embodiments, the motor control unit 102 further includes a control apparatus 1022. The control apparatus 1022 is configured to be connected to the direct current drive module 1031 and the alternating current drive module 1041 through an internal line. The control apparatus 1022 may control the direct current drive module 1031 to drive the direct current breaking module 1032 to establish or break the connection between the three-phase bridge arm 1021 and the direct current bus. The control apparatus 1022 may also control the alternating current drive module 1041 to drive the alternating current breaking module 1042 to establish or break the connections between the bridge arm midpoints of the at least two phase bridge arms and the at least two phase windings.

According to this embodiment of this application, the control apparatus 1022 in the motor control unit 102 may control both the direct current breaker 103 and the alternating current breaker 104. In other words, the motor control unit 102 does not need to set two independent control apparatuses to respectively control the direct current breaker 103 and the alternating current breaker 104, but can implement control of the direct current breaker 103 and the alternating current breaker 104 through a same control apparatus, so that a quantity of control apparatuses of the motor control unit 102 can be reduced. This facilitates cost and volume control of the motor control unit 102, and can reduce structure complexity of the motor control unit 102.

The following describes a manner of controlling the direct current breaker 103 and the alternating current breaker 104 by the control apparatus 1022 with reference to specific embodiments.

In some embodiments, in response to that a current passing through the direct current breaker 103 is greater than a first current, or an increase rate of a current passing through the direct current breaker 103 is greater than a first current rate, the control apparatus 1022 controls the direct current drive module 1031 to drive the direct current breaking module 1032; or in response to that a current passing through the alternating current breaker 104 is greater than a second current, or an increase rate of a current passing through the alternating current breaker 104 is greater than a second current rate, the control apparatus 1022 controls the alternating current drive module 1041 to drive the alternating current breaking module 1042.

It may be understood that the first current may be understood as a large current value, and the first current rate may be understood as a large change rate. A part of a direct current in a current output by the power battery is input to the three-phase bridge arm 1021 through the direct current breaker 103. When a short-circuit fault occurs in the three-phase bridge arm 1021, a current passing through the direct current breaker 103 suddenly increases. When the current passing through the direct current breaker 103 is greater than the first current or an increase rate of the current passing through the direct current breaker 103 is greater than the first current rate, it indicates that an internal fault occurs in the powertrain 10. In this case, to protect other electrical components, the direct current breaker 103 needs to be turned off, to break a connection between the powertrain 10 and the direct current bus, thereby isolating the short-circuit fault in the powertrain 10.

In addition, when a short-circuit fault occurs in another high-voltage component on the direct current bus, the current passing through the direct current breaker 103 also suddenly increases. When the current passing through the direct current breaker 103 is greater than the first current or when the increase rate of the current passing through the direct current breaker 103 is greater than the first current rate, the control apparatus 1022 controls the direct current breaker 103 to be turned off, so that the short-circuit fault on the direct current bus can be further prevented from spreading inside the powertrain 10, and safety of the powertrain 10 can be improved.

Similarly, the second current may be understood as a large current value, and the second current rate may be understood as a large change rate. When the current passing through the alternating current breaker 104 is greater than the second current or the increase rate of the current passing through the alternating current breaker 104 is greater than the second current rate, it indicates that a short-circuit fault occurs in any phase winding of the motor 101. In this case, to protect the switch module in the three-phase bridge arm 1021 and other electrical components connected in parallel on the direct current bus, the alternating current breaker 104 needs to be turned off, to break a connection between the three-phase bridge arm 1021 and the motor 101, thereby isolating the short-circuit fault of the motor 101.

It may be understood that the motor control unit 102 may include a detection apparatus. The detection apparatus may detect the currents passing through the direct current breaker 103 and the alternating current breaker 104, and send a current signal to the control apparatus 1022, and the control apparatus 1022 may control the direct current breaker 103 based on the current signal. The current signal may indicate the current or the increase rate of the current passing through the direct current breaker 103 or the alternating current breaker 104, or may indicate only that an overcurrent phenomenon occurs in the direct current breaker 103 or the alternating current breaker 104. This is not limited in this embodiment of this application.

According to this embodiment of this application, the control apparatus 1022 may control a corresponding breaker to be turned off when the current passing through the direct current breaker 103 or the alternating current breaker 104 significantly increases, so that a control manner is simple, and reliability is high.

In some embodiments, in response to that a current passing through any phase bridge arm is greater than a third current, or a change rate of a current passing through any phase bridge arm is greater than a third current rate, the control apparatus 1022 first controls the direct current drive module 1031 to drive the direct current breaking module 1032, and then controls the alternating current drive module 1041 to drive the alternating current breaking module 1042.

It may be understood that if a single switch module in any phase bridge arm in the three-phase bridge arm 1021 is short-circuited, a current on the phase bridge arm significantly increases when the switch transistor module is closed. In this case, to avoid a short-circuit fault of the switch module from spreading through the direct current bus, the control apparatus 1022 may first control the direct current drive module 1031 to drive the direct current breaking module 1032, to break the connection between the three-phase bridge arm 1021 and the direct current bus, thereby avoiding occurrence of propulsion power of the electric vehicle 01.

In addition, when the motor 101 is a synchronous motor, if a single switch module in any phase bridge arm in the three-phase bridge arm 1021 is short-circuited, the current on the phase bridge arm significantly increases when the switch transistor module is closed. In this case, if a fault in the switch module is not isolated, a generated short-circuit current causes the synchronous motor to generate a large braking torque, thereby affecting traveling safety. Therefore, the control apparatus 1022 needs to control the alternating current breaker 104 to break the connection between the three-phase bridge arm 1021 and the motor 101 when a current passing through any phase bridge arm in the three-phase bridge arm 1021 is greater than the third current or when an increase rate of a current passing through any phase bridge arm in the three-phase bridge arm 1021 is greater than the third current rate. The at least two phase bridge arms may include the any phase bridge arm to which the invalid switch module belongs, or may not include the any phase bridge arm. This is not limited in this embodiment of this application.

It may be understood that the motor control unit 102 may include N phase bridge arms, and the N phase bridge arms are connected to N phase windings of the motor 101, where N is a positive integer and is greater than 2. In this application, N being 3 is used for description. When N is another value, refer to a similar manner. Details are not described herein again. When the motor control unit 102 includes the N phase bridge arms, the control apparatus 1022 may control the alternating current breaker 104 to break connections between (N-1) phase bridge arms and (N-1) phase windings connected to the motor 101.

According to this embodiment of this application, when the current passing through the any phase bridge arm in the three-phase bridge arm significantly increases, the control apparatus 1022 may first control the direct current breaker 103 to be turned off to prevent an internal fault in the powertrain 10 from spreading along the direct current bus, and then control the alternating current breaker 104 to be turned off to prevent the motor 101 in the powertrain from generating a braking torque due to the invalid switch module in the three-phase bridge arm, so that the vehicle does not suddenly decelerate even when power is lost, thereby further improving traveling safety.

In some embodiments, in response to that a decrease rate of a voltage between the positive direct current bus and the negative direct current bus is greater than a first voltage rate, the control apparatus 1022 controls the direct current drive module 1031 to drive the direct current breaking module 1032; or in response to that a decrease rate of a phase voltage between any two phase windings in the three phase windings of the motor 101 is greater than a second voltage rate, the control apparatus 1022 controls the alternating current drive module 1041 to drive the alternating current breaking module 1042.

The first voltage rate may be understood as a large voltage change rate. When a short-circuit fault occurs in an electrical component, for example, any switch module in the three-phase bridge arm 1021, inside the motor control unit 102, the voltage between the positive direct current bus and the negative direct current bus drops quickly. Therefore, the control apparatus 1022 may control the direct current drive module 1031 to drive the direct current breaking module 1032 when the decrease rate of the voltage between the positive direct current bus and the negative direct current bus is greater than the first voltage rate, to break the connection between the powertrain 10 and the direct current bus, so that the internal fault in the powertrain 10 can be prevented from spreading to other high-voltage electrical components.

In addition, when the short-circuit fault occurs on the high-voltage electrical components connected in parallel on the direct current bus, the voltage between the positive direct current bus and the negative direct current bus also drops quickly. Therefore, when the decrease rate of the voltage between the positive direct current bus and the negative direct current bus is greater than the first voltage rate, the control apparatus 1022 controls the direct current drive module 1031 to drive the direct current breaking module 1032, so that a fault of other electrical components can be prevented from spreading inside the powertrain 10, and safety of the powertrain 10 can be improved.

The second voltage rate may be understood as a large voltage change rate. When a short-circuit fault occurs in any one of the three phase windings of the motor 101, a phase voltage between the faulty phase winding and another phase winding drops quickly. Therefore, the control apparatus 1022 may control the alternating current drive module 1041 to drive the alternating current breaking module 1042 when the decrease rate of the phase voltage between the any two phase windings in the three phase windings of the motor 101 is greater than the second voltage rate, to break a connection between the motor control unit 102 and the motor 101, prevent a fault in the motor 101 from spreading inside the motor control unit 102, and improve safety of the powertrain 10.

According to this embodiment of this application, the control apparatus 1022 may control running of the direct current breaker 103 based on a voltage change between the positive direct current bus and the negative direct current bus, and may further control running of the alternating current breaker 104 based on a voltage change between the any two phase windings of the motor 101, so that a control manner is simple, and reliability is high.

In some embodiments, the motor control unit 102 further includes a temperature sensor. When a temperature indicated by the temperature sensor is greater than a preset temperature value, a direct current protection switch is turned off. The temperature sensor herein may be disposed on a surface of the housing of the motor control unit 102, at a heat dissipation waterway inside the motor control unit 102, or at a power device and another electrical element of the motor control unit 102. When the temperature indicated by the temperature sensor is excessively high, it indicates that the motor control unit 102 may be faulty, and the control apparatus 1022 controls the direct current breaker 103 to be turned off in time, to avoid an over-temperature of the motor control unit 102. In this embodiment of this application, one or more temperature sensors may be disposed.

In some embodiments, a first temperature sensor is disposed on a surface of a circuit board of the motor control unit 102, and a second temperature sensor is disposed on an inner surface of the housing of the motor control unit 102. When a temperature indicated by the first temperature sensor is greater than a first preset temperature value, or when a temperature indicated by the second temperature sensor is greater than a second preset temperature value, the direct current protection switch is turned off. The first preset temperature value is greater than the second temperature value. Because an over-temperature location of the motor control unit 102 is usually on a circuit component, when the motor control unit 102 encounters over-temperature, a temperature at the circuit board is greater than a temperature at the housing. Therefore, when it is determined whether the motor control unit 102 encounters over-temperature, the first preset temperature value is greater than the second temperature value.

In some embodiments, when an average value of the temperature indicated by the first temperature sensor and the temperature indicated by the second temperature sensor is greater than a third preset temperature value, the direct current breaker 103 is turned off. When determining over-temperature, temperature values collected by a plurality of temperature sensors may be considered to avoid inaccurate determining caused by a single invalid temperature sensor.

In some embodiments, when the control apparatus 1022 and the control circuit used to control the three-phase bridge arm 1021 are independent of each other, the control apparatus 1022 may transmit a received current signal, voltage signal, temperature signal, or the like to the control circuit of the three-phase bridge arm 1021, and the control circuit makes a decision on whether to actuate the direct current breaker 103 and/or the alternating current breaker 104. Further, the control apparatus 1022 drives the direct current drive module 1031 and/or the alternating current drive module 1041 only after receiving a control signal of the control circuit. In this way, the control circuit of the three-phase bridge arm 1021 determines whether the direct current breaker 103 and/or the alternating current breaker 104 need/needs to be actuated, and control reliability is higher.

In some embodiments, the control apparatus 1022 is further configured to control a magnitude and a frequency of an alternating current output by the three-phase bridge arm 1021 to the motor 101. In other words, the control apparatus 1022 may alternatively be used as the control circuit of the three-phase bridge arm 1021. Specifically, the control apparatus 1022 may control, by controlling turn-on and turn-off of a switch transistor in the three-phase bridge arm 1021, a magnitude and a frequency of an alternating current output by the bridge arm midpoint of the three-phase bridge arm 1021 to the three phase windings of the motor 101.

According to this embodiment of this application, the motor control unit 102 may reuse the control apparatus 1022 to control the switch transistor in the three-phase bridge arm 1021, so that integration of the motor control unit 102 is higher. This facilitates cost and volume control of the motor control unit 102, and can further reduce structure complexity of the motor control unit 102.

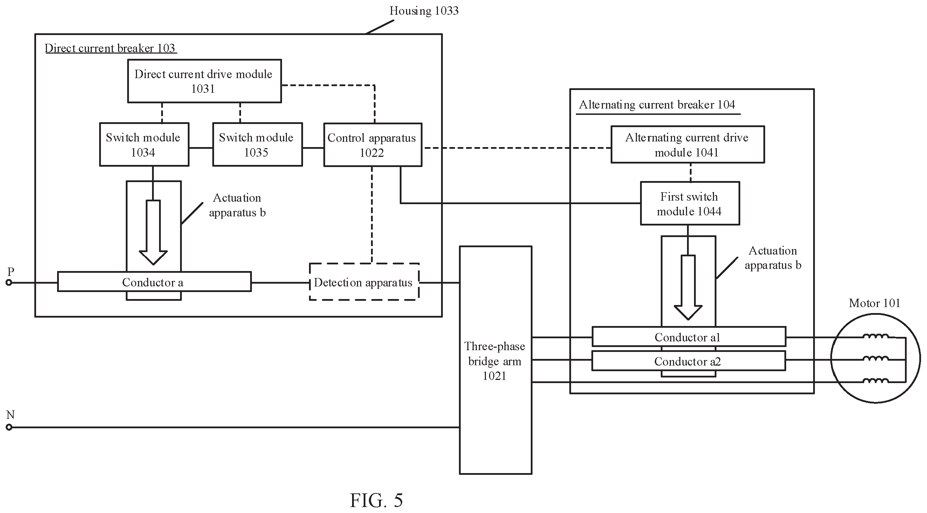

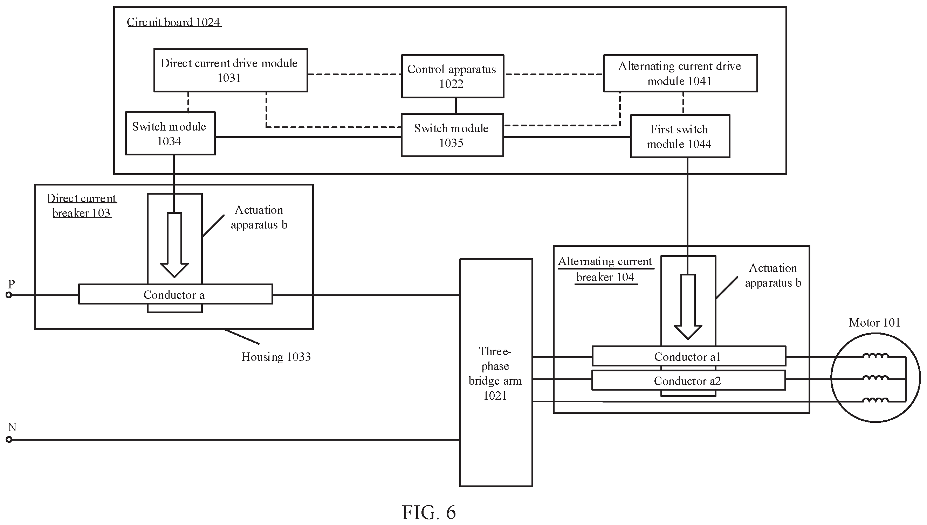

The following describes specific structures of the direct current breaker 103 and the alternating current breaker 104 provided in embodiments of this application with reference to FIG. 5 and FIG. 6.

As shown in FIG. 5, the direct current breaker 103 may include the direct current drive module 1031, the direct current breaking module 1032, and the housing 1033. The housing 1033 is at least configured to accommodate the direct current breaking module 1032. The direct current breaking module 1032 may include a conductor a and an actuation apparatus b. In a normal running process of the motor control unit 102, the power battery may supply power to the three-phase bridge arm 1021 through the direct current bus and the conductor a in the direct current breaking module 1032. When a short-circuit fault occurs on the powertrain 10, the control apparatus 1022 may output a drive signal to the direct current drive module 1031, to control the actuation apparatus b to quickly cut off the conductor a, so that the power battery stops supplying power to the powertrain 10.

Still refer to FIG. 5. When the conductor a is connected in series between a positive input end of the three-phase bridge arm 1021 and the positive direct current bus, the direct current drive module 1031 is configured to drive the actuation apparatus b to break a connection between the three-phase bridge arm 1021 and the positive direct current bus. It may be understood that when the conductor a is connected in series between a negative input end of the three-phase bridge arm 1021 and the negative direct current bus, the direct current drive module 1031 is configured to drive the actuation apparatus b to break a connection between the three-phase bridge arm 1021 and the negative direct current bus. When the direct current breaker 103 is connected in series between two ends of the three-phase bridge arm 1021 and the positive direct current bus and the negative direct current bus, the direct current breaking module 1032 may include two conductors a 1 and a2. The conductor a1 may be connected in series between the positive input end of the three-phase bridge arm 1021 and the positive direct current bus, and the conductor a2 may be connected in series between the negative input end of the three-phase bridge arm 1021 and the negative direct current bus. When a short-circuit fault occurs on the powertrain 10, the control apparatus 1022 may output a drive signal to the direct current drive module 1031, to control the actuation apparatus b to quickly cut off the conductor a1 and the conductor a2, so that the power battery stops supplying power to the powertrain 10. It is easy to understand that the direct current drive module 1031 may drive one actuation apparatus b to successively cut off the two conductors, or may drive two actuation apparatuses to cut off the two conductors respectively. This is not limited.

In some embodiments, the conductor a may be designed as a structure that can be quickly cut off. For example, the conductor a may be designed as a copper bar with a weak point, and the actuation apparatus b may quickly cut off the weak point of the copper bar in response to the drive signal sent by the direct current breaking module 1032.

It may be understood that for a structure of the alternating current breaker 104 and a specific manner in which the motor control unit 102 controls the alternating current breaker 104, refer to the foregoing content. Details are not described again.

Still refer to FIG. 5. In some embodiments, the direct current breaker 103 may further include two switch modules 1034 and 1035 that are connected in series, and the two switch modules 1034 and 1035 are configured to be connected to the control apparatus 1022 and the direct current breaking module 1032. The control apparatus 1022 may control the direct current drive module 1031 to drive the two switch modules 1034 and 1035 to be turned on, so that the direct current breaking module 1032 breaks the connection between the three-phase bridge arm 1021 and the direct current bus.

One end of the switch module 1034 is configured to be connected to the actuation apparatus b in the direct current breaking module 1032, the other end is configured to be connected to one end of the switch module 1035, and the other end of the switch module 1035 is configured to be connected to the control apparatus 1022. In this way, after the direct current drive module 1031 drives the two switch modules 1034 and 1035 to be turned on, the connection between the control apparatus 1022 and the actuation apparatus b is turned on. In this case, the control apparatus 1022 may supply power to the actuation apparatus b, so that the actuation apparatus b quickly cuts off the conductor a, to break the connection between the three-phase bridge arm 1021 and the direct current bus.

In some embodiments, for a switch module of a specific structure, the control apparatus 1022 may further control the two switch modules 1034 and 1035 to be both turned off, so that the direct current breaking module 1032 breaks the connection between the three-phase bridge arm 1021 and the direct current bus.

It may be understood that a separate auxiliary power supply (not shown in the figure) may be further disposed in the direct current breaker 103 to supply power to the actuation apparatus b. In this case, two ends of the two switch modules 1034 and 1035 are configured to be connected to the auxiliary power supply and the actuation apparatus b, and the control apparatus 1022 may control the direct current drive module 1031 to drive the two switch modules 1034 and 1035 to act synchronously, so that the auxiliary power supply supplies power to the actuation apparatus b.

It may be understood that the switch module 1034 and the switch module 1035 may include one switch or switch transistor or a plurality of switches or switch transistors. The plurality of switches or switch transistors may be one or more of a plurality of types of switch transistors such as a relay, a metal-oxide semiconductor field-effect transistor (metal-oxide semiconductor field-effect transistor, MOSFET), a bipolar junction transistor (bipolar junction transistor, BJT), and an insulated gate bipolar transistor (insulated gate bipolar transistor, IGBT). The switch transistors are not enumerated in this embodiment of this application again. Each switch transistor includes a first electrode, a second electrode, and a control electrode. The direct current drive module 1031 is configured to be connected to the control electrode of the switch transistor, to control turn-on and turn-off of the switch transistor. The MOSFET transistor is used as an example. The control electrode of the switch transistor is a gate, the first electrode of the switch transistor may be a source of the switch transistor, and the second electrode may be a drain of the switch transistor. Alternatively, the first electrode may be a drain of the switch transistor, and the second electrode may be a source of the switch transistor.

It may be understood that the two switch modules 1034 and 1035 may be centrally disposed on a side of the control apparatus 1022 or a side of the direct current breaker 103 (for example, accommodated in a housing 1033 of the direct current breaker 103), or may be separately disposed, to be specific, one switch module is disposed on the side of the control apparatus 1022, and the other switch module is disposed on the side of the direct current breaker 103. This is not limited in this embodiment of this application.

According to this embodiment of this application, the control apparatus 1022 needs to control the two switch modules 1034 and 1035 to act synchronously, so that the actuation apparatus b receives power supplied by the control apparatus 1022 and quickly cuts off the conductor a. This can effectively avoid a case in which the control apparatus 1022 controls the actuation apparatus b to perform an incorrect action because the switch module is invalid when only one switch module is disposed in the breaker, and ensure stability and reliability of the direct current breaker 103.

In some embodiments, in response to power-on of the control apparatus 1022, the control apparatus 1022 may further control the direct current drive module 1031 to drive one switch module to be first turned on and then turned off, and control, within preset duration after the one switch module is turned off, the direct current drive module 1031 to drive the other switch module to be first turned on and then turned off.

Power-on of the control apparatus 1022 may be understood as power-on of the motor control unit 102. In this embodiment of this application, each time the motor control unit 102 is woken up and powered on, the control apparatus 1022 controls the direct current drive module 1031 to perform self-check on the two switch modules. The two switch modules acting simultaneously causes the direct current breaking module 1032 act. Therefore, the control apparatus 1022 needs to control the direct current drive module 1031 to drive the two switch modules 1034 and 1035 to be successively turned on, to detect whether the two switch modules are in a controlled state.

The preset duration may be understood as extremely short duration. The control apparatus 1022 controls the direct current drive module 1031 to drive the other switch module to be turned on only after preset duration following turn-off of one switch module, to ensure that the two switch modules are not simultaneously turned on, thereby avoiding an incorrect action of the direct current breaking module 1032. For example, the preset duration may be 1 ms, or may be 0. This is not limited in this embodiment of this application.

It may be understood that a sequence in which the control apparatus 1022 controls the two switch modules to be turned on and turned off is not limited in this embodiment of this application. For example, the control apparatus 1022 may first control the direct current drive module 1031 to drive the switch module 1034 to be first turned on and then turned off, and control, within preset duration after the switch module 1034 is turned off, the direct current drive module 1031 to drive the switch module 1035 to be first turned on and then turned off.

According to this embodiment of this application, when being powered on, the control apparatus 1022 performs self-check on the two switch modules in the direct current breaker 103, to improve stability and reliability of the direct current breaker 103, and improve security of the motor control unit 102.

In some embodiments, in a process of controlling the direct current drive module 1031 to drive one switch module to be first turned on and then turned off, and controlling, within preset duration after the one switch module is turned off, the direct current drive module 1031 to drive the other switch module to be first turned on and then turned off, the control apparatus 1022 outputs a fault signal in response to a failure of any switch module to be turned on or turned off, or an interval between turn-on moments of the two switch modules or an interval between turn-off moments of the two switch modules being greater than the preset duration, where the fault signal indicates that the direct current breaker 103 is faulty.

The direct current breaking module 1032 can run normally only when the two switch modules need to act synchronously. A failure of any switch module to be turned on or turned off may be understood as that the control apparatus 1022 cannot control an action of the any switch module. This indicates that the direct current breaker 103 cannot break the connection between the three-phase bridge arm 1021 and the direct current bus even if a short-circuit fault occurs in the powertrain 10. As a result, the control apparatus 1022 interprets this as a fault occurring in the direct current breaker 103.

The interval between the turn-on moments of the two switch modules or the interval between the turn-off moments of the two switch modules being greater than the preset duration may be understood as that there is a delay in controlling at least one switch module by the control apparatus 1022. If a delay in controlling any switch module by the direct current breaker 103 occurs when the powertrain 10 is faulty, a short-circuit fault on a side of the powertrain 10 may spread to other high-voltage electrical components of the electric vehicle 01 because the direct current breaker 103 cannot be turned off in time. Therefore, the control apparatus 1022 interprets this as a fault in the direct current breaker 103.

In other words, in a process in which the control apparatus 1022 performs self-check on the two modules in the direct current breaker 103, if any switch module cannot be normally turned on or turned off, or there is a delay in controlling any switch module to be turned on or turned off, the control apparatus 1022 outputs a fault signal to another controller in the electric vehicle 01, to play an alarm function. For example, the control apparatus 1022 may output a fault signal to a vehicle control unit of the electric vehicle 01, and the vehicle control unit may prompt, through an in-vehicle display, a speaker, atmosphere light blinking, or the like, a driver that the direct current breaker 103 in the powertrain 10 is faulty. Further, the vehicle control unit may further display a preset animation on the display in the vehicle to guide the driver to go to a maintenance point as early as possible for inspection and maintenance. For another example, the control apparatus 1022 may further send a battery management system (battery management system, BMS) of the power battery, so that the BMS turns off a switch of the direct current bus more promptly when a current in the direct current bus significantly increases, to avoid a short-circuit current from damaging a cell in the power battery and other high-voltage electrical components of the electric vehicle 01.

According to this embodiment of this application, in a process of performing self-check on the two switch modules in the direct current breaker 103, if any switch module is uncontrolled or has an excessively long delay, the control apparatus 1022 actively outputs a fault signal to another controller in the electric vehicle 01, so that the driver can learn a fault status of the powertrain 10 in time, thereby ensuring safety of the electric vehicle 01.

Still refer to FIG. 5. In some embodiments, the housing 1033 of the direct current breaker 103 is configured to accommodate the direct current drive module 1031, the direct current breaking module 1032, the control apparatus 1022, and the two switch modules 1034 and 1035. In other words, the control apparatus 1022 may be integrated on the side of the direct current breaker 103, so that the direct current breaker 103 can not only control running of the direct current breaker 103, but also control running of the alternating current breaker 104.

Specifically, the control apparatus 1022 may be connected to the direct current breaking module 1032 through the two switch modules 1034 and 1035 and the internal line, so that a power supply path from the control apparatus 1022 to the direct current breaking module 1032 can be shortened. In addition, the control apparatus 1022 is further connected to the direct current drive module 1031 through the internal line, so that a control path from the control apparatus 1022 to the direct current drive module 1031 can be shortened. This helps shorten a delay in controlling the direct current breaker 103 by the control apparatus 1022.

It may be understood that the control apparatus 1022 may be further connected to the alternating current drive module 1041 through an interface on a surface of the housing 1033, to control turn-on and turn-off of the alternating current breaking module 1042.

According to this embodiment of this application, the control apparatus 1022 is integrated inside the housing 1033 of the direct current breaker 103, so that the delay in controlling the direct current breaker 103 can be shortened, it can be ensured that an internal fault in the powertrain 10 does not spread along the direct current bus, and reliability of fault isolation of the motor control unit 102 can be further improved.

In some embodiments, the alternating current breaker 104 may further include two switch modules 1044 and 1045 (not shown in the figure) that are configured to be connected to the control apparatus 1022 and the alternating current breaking module 1042, and the control apparatus 1022 needs to drive the alternating current drive module 1041 to drive the two switch modules 1044 and 1045 to act synchronously, so that the control apparatus 1022 can supply power to the alternating current breaking module 1042, to break the connections between the bridge arm midpoints of the at least two phase bridge arms and the at least two corresponding phase windings.

It may be understood that when being powered on, the control apparatus 1022 may further perform self-check on the two switch modules 1044 and 1045 in the alternating current breaker 104. For a specific manner, refer to the foregoing related content. Details are not described herein again.

According to this embodiment of this application, structures of the direct current breaker 103 and the alternating current breaker 104 are the same, so that the control apparatus 1022 does not need to separately control the two types of breakers in different manners. This helps reduce control complexity of the two types of breakers. In addition, in the motor control unit, breakers of a same structure are respectively used as the direct current breaker and the alternating current breaker. This helps reduce costs and complexity of installation and replacement of the breaker.

In some embodiments, the alternating current breaker 104 and the direct current breaker 103 may reuse one switch module. Still refer to FIG. 5. The alternating current breaker 104 includes a first switch module 1044, one end of the first switch module 1044 is configured to be connected to the alternating current breaking module 1042, the other end of the first switch module 1044 is configured to be connected to one end of a second switch module in the two switch modules 1034 and 1035, and the other end of the second switch module is configured to be connected to the control apparatus 1022. The control apparatus 1022 is specifically configured to control the alternating current drive module 1041 to drive the first switch module 1044 and the second switch module, so that the alternating current breaking module 1042 breaks the connections between the bridge arm midpoints of the at least two phase bridge arms and the at least two phase windings. In other words, the alternating current breaker 104 may include only one switch module, and the other switch module reuses one switch module of the direct current breaker 103.

It may be understood that the second switch module may be any one of the two switch modules 1034 and 1035. This is not limited in this application. In addition, both the alternating current drive module 1041 and the direct current drive module 1042 may control turn-on and turn-off of the second switch module, and the control apparatus 1022 may control, when a short-circuit fault occurs in any phase winding of the motor 101, the alternating current drive module 1041 to drive the first switch module 1044 and the second switch module to act synchronously, to control the actuation apparatus b in the alternating current breaking module 1042 to cut off the conductor a, thereby breaking the connections between the bridge arm midpoints of the at least two phase bridge arms and the at least two phase windings.

It may be understood that when the two switch modules 1034 and 1035, the control apparatus 1022, and the direct current drive module 1031 are integrated on the side of the direct current breaker, the alternating current drive module 1041 may be configured to drive only the first switch module 1044, and the direct current drive module 1031 is responsible for driving the second switch module. Specifically, when a short-circuit fault occurs in any phase winding of the motor 101, the control apparatus 1022 may control the alternating current drive module 1041 to drive the first switch module 1044 to act, and control the direct current drive module 1031 to drive the second switch module to act synchronously, to enable the alternating current breaking module 1042 to act.

According to this embodiment of this application, the direct current breaker 103 and the alternating current breaker 104 may share one switch module. This reduces a quantity of switch modules that need to be controlled by the control apparatus 1022, and reduces control complexity.

Further, in some embodiments, the housing 1033 of the direct current breaker 103 is further configured to accommodate the alternating current drive module 1041 and the first switch module 1044.

According to this embodiment of this application, the alternating current drive module 1041, the two switch modules of the direct current breaker 103, and one switch module of the alternating current breaker are all integrated inside the housing of the direct current breaker 103, so that the alternating current drive module 1041 has higher stability in controlling the first switch module and the reused second switch module. In addition, an internal structure of the alternating current drive module 1041 is simpler, and reliability is higher.

In some embodiments, in the process of controlling the alternating current drive module 1041 to drive the first switch module 1044 and the second switch module to be turned on, in response to a failure of the first switch module 1044 to be turned on, the control apparatus 1022 controls the direct current drive module 1031 to drive the two switch modules 1034 and 1035 to be turned on, so that the direct current breaking module 1032 breaks the connection between the three-phase bridge arm 1021 and the direct current bus.

It may be understood that when a short-circuit fault occurs in the winding of the motor 101, in a process of controlling, by the control apparatus 1022, the alternating current breaker 104 to break the connection between the bridge arm midpoint and the winding, if the first switch module 1044 cannot be controlled to be turned on or turned off due to a fault, the control apparatus 1022 may control the direct current breaker 103 to break the connection between the three-phase bridge arm 1021 and the direct current bus, to break a connection between the powertrain 10 and the direct current bus, thereby avoiding the fault spreading of the motor 101. Specifically, the control apparatus 1022 may control the direct current drive module 1031 to drive the two switch modules 1034 and 1035 to act synchronously, so that the actuation apparatus b in the direct current breaking module 1032 cuts off the conductor a to break the connection between the three-phase bridge arm 1021 and the direct current bus.

According to this embodiment of this application, when a short-circuit fault occurs in the motor 101 and the alternating current breaker 104 cannot be controlled to be turned off, the control apparatus 1022 may further control the direct current breaker 103 to be turned off, to prevent the short-circuit fault of the motor 101 from spreading to other high-voltage electrical components of the electric vehicle 01 through the direct current bus, thereby further improving safety of the electric vehicle 01. In addition, because the direct current breaker 103 and the alternating current breaker 104 are controlled by a same control apparatus 1022, a delay of controlling the direct current breaker 103 to be turned off when the alternating current breaker 104 is faulty can be shortened, and reliability of fault isolation of the motor control unit 102 can be further improved.

In some embodiments, the motor control unit 102 includes a circuit board 1024, and the circuit board 1024 is configured to: bear the direct current drive module 1031, the alternating current drive module 1041, and an electrical component of the control apparatus 1022.

It may be understood that one circuit board 1024 bears the direct current drive module 1031, the alternating current drive module 1041, and the electrical component of the control apparatus 1022, or the direct current drive module 1031, the alternating current drive module 1041, and the control apparatus 1022 are integrated on a same circuit board, so that a path for transmitting the control signal by the control apparatus 1022 to the direct current drive module 1031 and the alternating current drive module 1041 can be shortened, thereby reducing interference to the control signal in a transmission process, and helping improve control stability and reliability.

Refer to FIG. 6. In some embodiments, the circuit board 1024 may be a circuit board that is in the motor control unit 102 and that is dedicated to bearing the direct current drive module 1031, the alternating current drive module 1041, and the electrical component of the control apparatus 1022, and is independent of a circuit board that is configured to bear an electrical component of the three-phase bridge arm 1021 or an electrical component of a control circuit of the three-phase bridge arm 1021. This helps further reduce electromagnetic interference to a control signal output by the control apparatus 1022, and ensure control stability.

In some embodiments, when the control apparatus 1022 and the control circuit of the three-phase bridge arm 1021 are independent circuits, the circuit board 1024 may also bear the electrical component for controlling the control circuit of the three-phase bridge arm 1021, to further improve integration of the motor control unit 102.

In some embodiments, the circuit board 1024 may be further configured to bear the electrical component of the three-phase bridge arm 1021, to further improve integration of the motor control unit 102.

According to this embodiment of this application, the motor control unit 102 uses a separate circuit board to bear the circuit board of the direct current drive module 1031, the alternating current drive module 1041, and the electrical component of the control apparatus 1022. In this way, the direct current breaker 103 and the alternating current breaker 104 may be used only as actuators to establish or break a connection between two ends of the direct current breaker 103 and a connection between two ends of the alternating current breaker 104, so that a structure is simple and reliable, and complexity and costs of installing and maintaining the two breakers can be further reduced.

Still refer to FIG. 6. The circuit board 1024 may be further configured to bear the two switch modules 1034 and 1035 and the first switch module 1044. In this way, the housing 1033 of the direct current breaker 103 includes only the direct current breaking module 1032, and a housing 1043 of the alternating current breaker 104 includes only the alternating current breaking module 1042. This helps reduce complexity of installing and maintaining the direct current breaker 103 and the alternating current breaker 104.

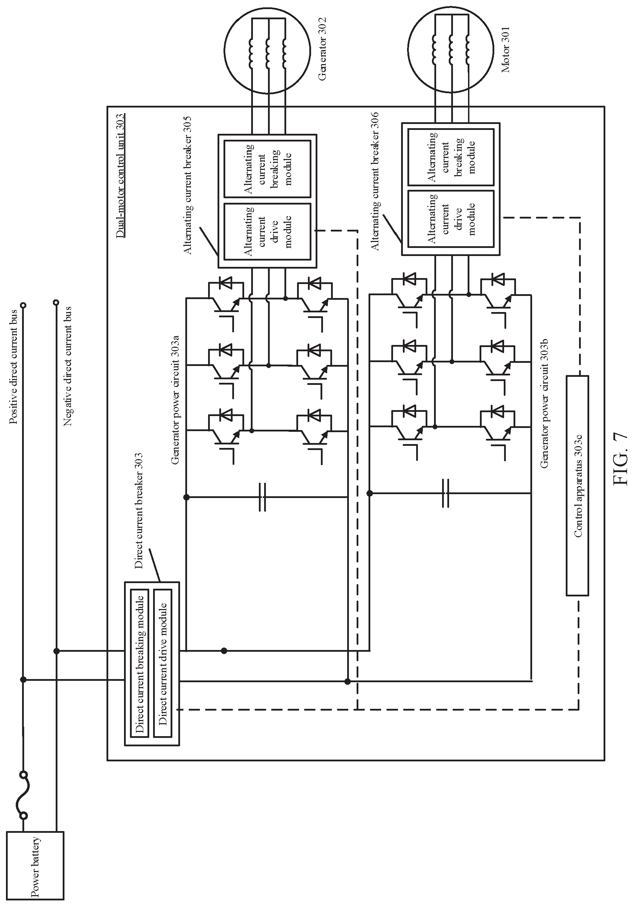

As shown in FIG. 7, in some embodiments, for the hybrid electric vehicle shown in FIG. 2C, the dual-motor control unit 303 is configured to: receive power supplied by the power battery to drive the drive motor of the electric vehicle, or transmit electric energy generated by the generator to the power battery to charge the power battery, and the dual-motor control unit 303 includes a dual-motor control unit housing, a generator power circuit 303a, a motor power circuit 303b, a control apparatus 303c, a direct current breaker 304, and two alternating current breakers 305 and 306. The dual-motor control unit housing is configured to accommodate the generator power circuit 303a, the motor power circuit 303b, and the direct current breaker. The dual-motor control unit housing includes one high-voltage direct current port. The dual-motor control unit 303 is configured to receive, through the one high-voltage direct current port, power supplied by the power battery or charge the power battery. The motor power circuit 303b is configured to receive a direct current from the one high-voltage direct current port through the direct current breaker 304. The generator power circuit 303a is configured to: receive an alternating current generated by the generator, and output a direct current to the one high-voltage direct current port through the direct current breaker 304. The direct current breaker 304 is configured to establish or break a connection between the motor power circuit 303b and the one high-voltage direct current port and a connection between the generator power circuit 303a and the one high-voltage direct current port. Each alternating current breaker includes an alternating current drive module and an alternating current breaking module. An alternating current drive module 3051 in one alternating current breaker 305 is configured to drive an alternating current breaking module 3052 to break a connection between the generator power circuit 303a and the generator 302. An alternating current drive module 3061 in the other alternating current breaker 306 is configured to drive an alternating current breaking module 3062 to break a connection between the motor power circuit 303b and the motor 301. The control apparatus 303c is configured to control running of the direct current breaker 404 and the two alternating current breakers 405 and 406.

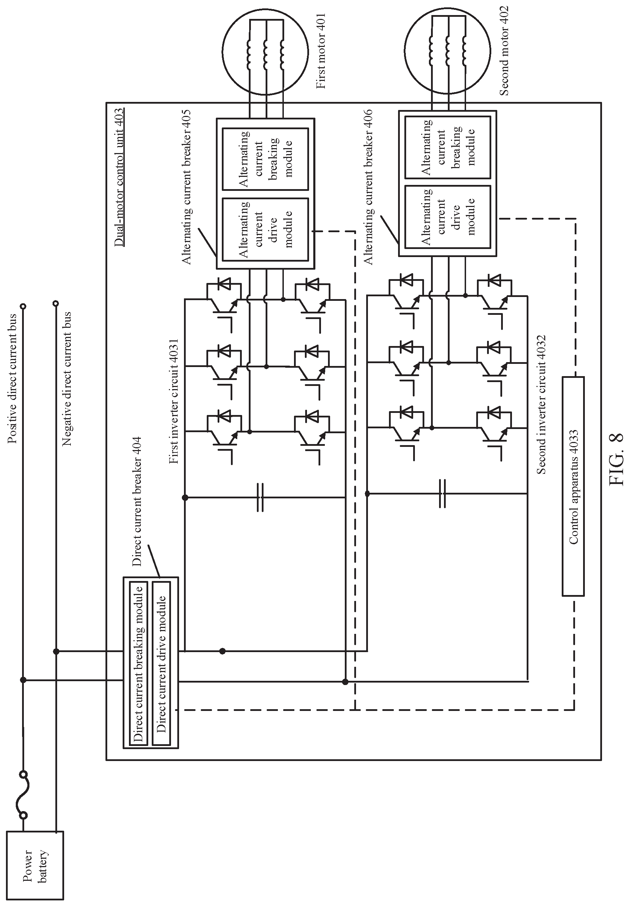

As shown in FIG. 8, in some embodiments, for the central distributed electric vehicle shown in FIG. 2D, the distributed powertrain 40 includes a dual-motor control unit 403 and two motors, and the distributed powertrain 40 is configured to drive two front wheels or two rear wheels of the electric vehicle. The dual-motor control unit 403 includes a first inverter circuit 4031, a second inverter circuit 4032, a control apparatus 4033, a direct current breaker 404, and two alternating current breakers 405 and 406. The first inverter circuit 4031 is configured to: receive, through the direct current breaker 404, power supplied by the direct current bus and output a three-phase alternating current to the first motor 401, and the second inverter circuit 4032 is configured to: receive, through a same direct current breaker 404, power supplied by the direct current bus and output a three-phase alternating current to another motor 402. The direct current breaker 404 includes a direct current drive module 4041 and a direct current breaking module 4042, and the direct current drive module 4041 is configured to drive the direct current breaking module 4042 to break a connection between the first inverter circuit 4031 and the direct current bus and a connection between the second inverter circuit 4032 and the direct current bus. Each alternating current breaker includes an alternating current drive module and an alternating current breaking module, an alternating current drive module 4051 in one alternating current breaker 405 is configured to drive an alternating current breaking module 4052 to break a connection between the first inverter circuit 4031 and the first motor 401, and an alternating current drive module 4061 in the other alternating current breaker 406 is configured to drive an alternating current breaking module 4062 to break a connection between the second inverter circuit 4032 and the second motor 402. The control apparatus 4033 is configured to control running of the direct current breaker 404 and the two alternating current breakers 405 and 406.

According to this embodiment of this application, the two inverter circuits in the distributed powertrain 40 may be combined and share a same direct current breaker to receive power supplied by the direct current bus, so that integration of the dual-motor control unit 403 is high, and it is easy to install and use. In addition, the two inverter circuits in the distributed powertrain 10 may be respectively connected to windings of the two motors through the two alternating current breakers, so that when any motor is faulty, only a corresponding alternating current breaker can be turned off, thereby avoiding occurrence of propulsion power of the electric vehicle 01.

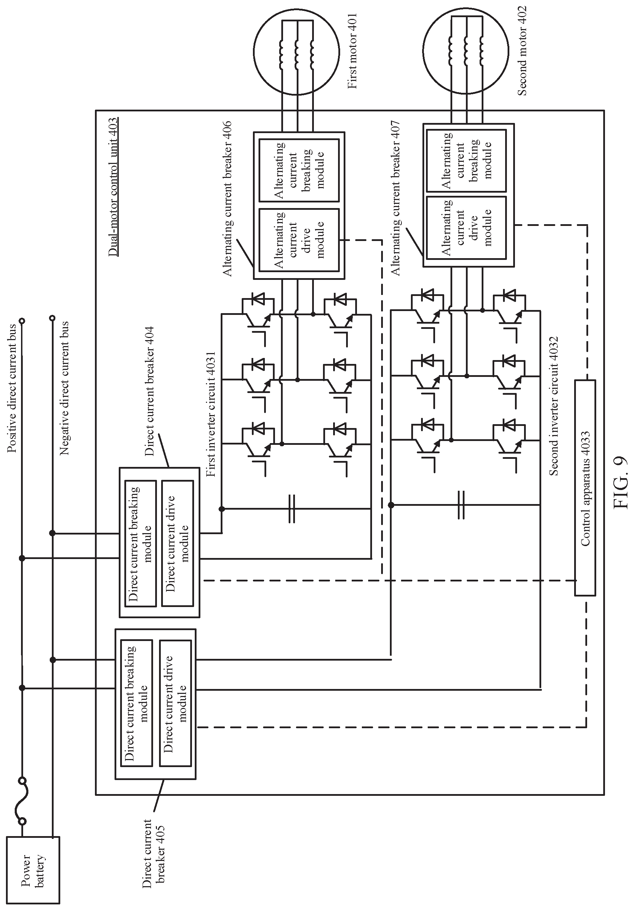

As shown in FIG. 9, in some embodiments, for the central distributed electric vehicle shown in FIG. 2D, the electric vehicle includes a distributed powertrain 40, the distributed powertrain 40 includes a dual-motor control unit 403 and two motors, and the distributed powertrain 40 is configured to drive two front wheels or two rear wheels of the electric vehicle. The dual-motor control unit 403 includes a first inverter circuit 4031, a second inverter circuit 4032, a control apparatus 4033, two direct current breakers 404 and 405, and two alternating current breakers 406 and 407. The first inverter circuit 4031 is configured to: receive, through the direct current breaker 404, power supplied by the direct current bus and output a three-phase alternating current to the first motor 401, and the second inverter circuit 4032 is configured to: receive, through the direct current breaker 405, power supplied by the direct current bus and output a three-phase alternating current to another motor 402. Each direct current breaker includes a direct current drive module and a direct current breaking module, a direct current drive module 4041 in the direct current breaker 404 is configured to drive a direct current breaking module 4042 to break a connection between the first inverter circuit 4031 and the direct current bus, and a direct current drive module 4051 in the direct current breaker 405 is configured to drive a direct current breaking module 4052 to break a connection between the second inverter circuit 4032 and the direct current bus. Each alternating current breaker includes an alternating current drive module and an alternating current breaking module, an alternating current drive module 4061 in one alternating current breaker 406 is configured to drive an alternating current breaking module 4062 to break a connection between the first inverter circuit 4031 and the first motor 401, and an alternating current drive module 4071 in the other alternating current breaker 407 is configured to drive an alternating current breaking module 4072 to break a connection between the second inverter circuit 4032 and the second motor 402. The control apparatus 4033 is configured to control running of the direct current breaker 404 and 405 and the two alternating current breakers 406 and 407.

According to this embodiment of this application, the two inverter circuits in the distributed powertrain 40 may separately receive, through the two direct current breakers, power supplied by the direct current bus, so that when any inverter circuit is faulty, the corresponding direct current breaker is turned off, thereby avoiding fault spreading of the any inverter circuit, and improving security of the dual-motor control unit 403. In addition, the two inverter circuits in the distributed powertrain 10 may be respectively connected to windings of the two motors through the two alternating current breakers, so that when any motor is faulty, only a corresponding alternating current breaker can be turned off, thereby avoiding occurrence of propulsion power of the electric vehicle 01.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor control unit with fault isolation, wherein the motor control unit is configured to: receive power supplied by a power battery through a direct current bus, and output an alternating current to a drive motor to drive the drive motor, and the motor control unit comprises:
a three-phase bridge arm, wherein two ends of the three-phase bridge arm are configured to be connected to the power battery through the direct current bus, and a bridge arm midpoint of each phase bridge arm in the three-phase bridge arm is configured to be connected to one phase winding of the drive motor;
a direct current breaker, wherein the direct current breaker comprises a direct current drive module and a direct current breaking module, and the direct current drive module is configured to drive the direct current breaking module to break a connection between the three-phase bridge arm and the direct current bus;
an alternating current breaker, wherein the alternating current breaker comprises an alternating current drive module and an alternating current breaking module, and the alternating current drive module is configured to drive the alternating current breaking module to break connections between bridge arm midpoints of at least two phase bridge arms and at least two corresponding phase windings; and
one control apparatus, wherein the one control apparatus is configured to be connected to the direct current drive module and the alternating current drive module through an internal line, and the one control apparatus is configured to: control the direct current drive module to drive the direct current breaking module to establish or break the connection between the three-phase bridge arm and the direct current bus, and control the alternating current drive module to drive the alternating current breaking module to establish or break the connections between the bridge arm midpoints of the at least two phase bridge arms and the at least two phase windings.

2. The motor control unit according to claim 1, wherein the motor control unit comprises a circuit board, and the circuit board is configured to: bear the direct current drive module, the alternating current drive module, and an electrical component of the control apparatus.

3. The motor control unit according to claim 1 or 2, wherein the direct current breaker further comprises at least two switch modules connected in series, the at least two switch modules are configured to be connected to the control apparatus and the direct current breaking module, and the control apparatus is specifically configured to:
control the direct current drive module to drive the at least two switch modules to be all turned on, so that the direct current breaking module breaks the connection between the three-phase bridge arm and the direct current bus.

4. The motor control unit according to claim 3, wherein the control apparatus is further configured to:
in response to power-on of the control apparatus, control the direct current drive module to drive one switch module to be first turned on and then turned off, and control, within preset duration after the one switch module is turned off, the direct current drive module to drive the other switch module to be first turned on and then turned off.

5. The motor control unit according to claim 4, wherein in the process of controlling the direct current drive module to drive the one switch module to be first turned on and then turned off, and controlling, within the preset duration after the one switch module is turned off, the direct current drive module to drive the other switch module to be first turned on and then turned off, the control apparatus is further configured to:
output a fault signal in response to a failure of any switch module to be turned on or turned off, or an interval between turn-on moments of the two switch modules or an interval between turn-off moments of the two switch modules being greater than the preset duration, wherein the fault signal indicates that the direct current breaker is faulty.

6. The motor control unit according to any one of claims 3 to 5, wherein a housing of the direct current breaker is configured to accommodate the direct current drive module, the direct current breaking module, the control apparatus, and the at least two switch modules.

7. The motor control unit according to any one of claims 3 to 6, wherein the alternating current breaker further comprises a first switch module, one end of the first switch module is configured to be connected to the alternating current breaking module, the other end of the first switch module is configured to be connected to one end of a second switch module in the at least two switch modules, the other end of the second switch module is configured to be connected to the control apparatus, and the control apparatus is specifically configured to:
control the alternating current drive module to drive the first switch module and the second switch module to be turned on, so that the alternating current breaking module breaks the connections between the bridge arm midpoints of the at least two phase bridge arms and the at least two phase windings.

8. The motor control unit according to claim 7, wherein in the process of controlling the alternating current drive module to drive the first switch module and the second switch module to be turned on, the control apparatus is further configured to:
in response to a failure of the first switch module to be turned on, control the direct current drive module to drive the two switch modules to be both turned on, so that the direct current breaking module breaks the connection between the three-phase bridge arm and the direct current bus.

9. The motor control unit according to claim 7, wherein the housing of the direct current breaker is further configured to accommodate the alternating current drive module and the first switch module.

10. The motor control unit according to any one of claims 1 to 9, wherein the control apparatus is specifically configured to:
in response to that a current passing through the direct current breaker is greater than a first current, or an increase rate of a current passing through the direct current breaker is greater than a first current rate, control the direct current drive module to drive the direct current breaking module; or
in response to that a current passing through the alternating current breaker is greater than a second current, or an increase rate of a current passing through the alternating current breaker is greater than a second current rate, control the alternating current drive module to drive the alternating current breaking module.

11. The motor control unit according to claim 10, wherein the control apparatus is further configured to:
in response to that a current passing through any phase bridge arm is greater than a third current, or an increase rate of a current passing through any phase bridge arm is greater than a third current rate, first control the direct current drive module to drive the direct current breaking module, and then control the alternating current drive module to drive the alternating current breaking module.

12. The motor control unit according to any one of claims 1 to 11, wherein the direct current bus comprises a positive direct current bus and a negative direct current bus, and the control apparatus is specifically configured to:
in response to that a decrease rate of a voltage between the positive direct current bus and the negative direct current bus is greater than a first voltage rate, control the direct current drive module to drive the direct current breaking module; or
in response to that a decrease rate of a phase voltage between any two phase windings in the three phase windings is greater than a second voltage rate, control the alternating current drive module to drive the alternating current breaking module.

13. The motor control unit according to any one of claims 1 to 12, wherein the control apparatus is further configured to control a magnitude and a frequency of the alternating current that is output by the three-phase bridge arm to the drive motor.

14. A distributed powertrain, wherein the distributed powertrain is configured to receive power supplied by a power battery, and is configured to drive two front wheels or two rear wheels of a vehicle, the distributed powertrain comprises a dual-motor control unit, a first motor, and a second motor, and the dual-motor control unit comprises:
a housing, wherein the housing is configured to accommodate a first inverter circuit and a second inverter circuit, a surface of the housing comprises one high-voltage direct current port, the first inverter circuit is configured to: receive, through the one high-voltage direct current port, power supplied by a direct current bus, and output an alternating current to the first motor, and the second inverter circuit is configured to: receive, through the one high-voltage direct current port, the power supplied by the direct current bus, and output an alternating current to the second motor;
a direct current breaker, wherein the direct current breaker comprises a direct current drive module and a direct current breaking module, and the direct current drive module is configured to drive the direct current breaking module to break a connection between the first inverter circuit and the direct current bus and a connection between the second inverter circuit and the direct current bus;
two alternating current breakers, wherein each alternating current breaker comprises an alternating current drive module and an alternating current breaking module, an alternating current drive module in one alternating current breaker is configured to drive an alternating current breaking module to break a connection between the first inverter circuit and the first motor, and an alternating current drive module in the other alternating current breaker is configured to drive an alternating current breaking module to break a connection between the second inverter circuit and the second motor; and
one control apparatus, wherein the control apparatus is configured to control running of the direct current breaker and the two alternating current breakers.

15. An electric vehicle, wherein the electric vehicle comprises a power battery and a powertrain, the powertrain comprises a drive motor and the motor control unit according to any one of claims 1 to 13, and the powertrain is configured to receive power supplied by the power battery to drive wheels of the electric vehicle.
